# EUROPEAN PATENT SPECIFICATION

(11) **EP 0 627 802 B1**
(45) Date of publication and mention of the grant of the patent: **11.08.1999**
(21) Application number: 94610029.4
(22) Date of filing: 31.05.1994
(51) Int. Cl.: H02G 3/04

(54) **A distribution duct including terminal means**
Distributionskanal einschliesslich Terminalanordnungen
Canal de distribution comprenant des dispositifs terminaux

(30) Priority: 01.06.1993 NO 931989
(43) Date of publication of application: 07.12.1994
(73) Proprietor: NKT HOLDING A/S, DK-2605 Brondby (DK)
(72) Inventor: Windfeld, Jan, DK-2820 Gentofte (DK); Pedersen, Kurt Lindegaard, DK-3400 Hillerod (DK); Nielsen, Henning, DK-2690 Karlslunde (DK); Borgesen, Egon, DK-2700 Bronshoj (DK); Andersen, Richard, DK-2635 Ishoj (DK); Marot, Lajos, DK-2830 Virum (DK)
(74) Representative: Siiger, Joergen

(56) References cited:
- EP-A- 0 375 607
- GB-A- 1 423 062

## Description

The present invention relates to a distribution duct for distribution of insulated electric cables and a plurality of internally mounted terminal means, such as outlet sockets and plugs, as well as a front panel hiding both cables and terminal means with plugs mounted therein, said terminal means being connected to power supply means.

Danish printed accepted specification No. 150,871 B discloses a cable channel including several small channels for power cables, low current signalling cables, data cables and telephone cables, and outlet sockets for the connection of plugs on cables extending from equipment arranged in the room outside the channel. A horizontal upper channel wall is hinged to a vertical front channel wall and to the back wall. The channel is opened by lifting up the upper channel wall with the result that the front channel wall follows the upward lifting and the plugs become visible and accessible for the arranging of mains plugs for the power supply of the associated equipment. The lower channel wall, viz. the channel bottom, is so narrow that an open space exists between said lower channel wall and the front wall. The connected mains cables, data connections, and telephones cables pass through the above space. This cable channel is rather wide because the outlet sockets and the associated cable plugs and cables take up considerable space.

German application No. 2,946,841 corresponds to Swedish printed accepted specification No. 425,758 and describes furthermore a cable channel for electrical installations and the like, where the outlet sockets are mounted below a cable shelf and are covered by a front panel. Other distribution devices are known from EP 0,375,607 and GB 1,423,062.

EP 0 375 607 shows some sockets, the inclination of which can be adjusted, preferably by an electrician.

The object of the present invention is to provide a distribution duct, also called a cable channel, with internal terminal means, such as outlet sockets hidden behind a front panel, and especially a channel being narrower than the known channels with internal, hidden outlet sockets, and which at the same time is easy to mount with current collector modules and outlet sockets for the electrician and easy to use for the daily user.

The advantage of using narrow cable channels is found in the efficient area available for furnishing and utilizing the room thereby being larger than the room available in connection with a broader cable channel.

According to the invention this object is obtained by means of a distribution duct for distribution of insulated electrical cables and having at least one shelf for cables and a plurality of internally mounted terminal means as well as a front panel hiding both cables and terminal means, with plugs mounted therein, said terminal means being connected to power supply means, characterised by a turnable junction connecting the terminal means to the power supply means, said turnable junction means being pivotally arranged about a first axis of rotation and pivotally arranged about a second axis of rotation substantially perpendicular to said first axis of rotation.

In order to make the channel as narrow as possible, said channel is not provided with conventional outlet sockets or terminal means but with movable terminal means and preferably a plurality of particular terminal means being adapted to be pivotally mounted inside the channel, such as by way of hinging and preferably pivotally about a vertical axis, whereby each terminal means can be turned forwards with the connection of said terminal means facing the user, i.e. the room. In this manner it is easy for a user to insert a plug. When a plug has been mounted in the terminal means, all said parts are turned into the channel in such a manner that terminal means, plugs and cables are arranged substantially parallel to the channel. Accordingly the channel need only be of a width corresponding to the width of the terminal means.

According to a preferred embodiment, the distribution duct may comprise at least one cable shelf for distributing insulated heavy current conductors or power cables, at least one cable shelf for apparatus cables from the terminal means and at least one cable shelf or bottom for distributing data cables and/or tele cables and that the turnable terminal means mounted on the turnable junction means is arranged in connection with a cable shelf for the apparatus cables, and that this shelf is provided with opening panels which can be opened in order to allow the user access to the terminal means at this shelf.

The distribution duct preferably comprises opening panels shaped as sliding doors slidable to the side or up and down. In this way, it is unnecessary to make room for a tipping down or to the side of said panels.

Alternatively, the opening panels may be shaped as hinged panels or as tip-up panels.

According to the invention an electrical terminal means may be mounted on a vertical pivot inside the distribution duct. An inner terminal means with means for receiving a plug may be rotatably mounted in a casing, said casing being turnably mounted in the distribution duct.

The apparatus cables can be arranged inside the channel up to the location where the user has arranged the apparatus to be connected to the outlet socket, i.e. no loose cables on the floor.

The invention is described in greater detail below by examples and with reference to the accompanying drawings, in which
Figure 1A illustrates a portion of an embodiment of a cable channel according to the invention,
Figure 1B is an end view of a preferred embodiment of a cable channel according to the invention with a closed sliding panel,
Figure 1C corresponds to Figure 1B, but with an open sliding panel,
Figure 2 shows the interior of a cable channel as shown in Figure 1A,
Figure 3A corresponds to Figure 2, but with cables and outlet sockets according to a second embodiment on a cable shelf for apparatus cables,
Figure 3B corresponds to Figure 2, but with outlet sockets according to a third embodiment and with heavy current cable on the uppermost cable shelf,
Figure 3C illustrates an example of an embodiment of an outlet socket,
Figure 4 illustrates a preferred embodiment of an outlet socket according to the invention,
Figure 5 is a rear view of the embodiment of Figure 4,
Figure 6 is a rear view of another embodiment of the same outlet socket,
Figure 7 is a sectional view through a second embodiment of a cable channel according to the invention,
Figure 8 illustrates an example of the hinging of a door,
Figure 9 is a front inclined view of the example of Figure 8,
Figure 10 illustrates a second example of the hinging of a door,
Figure 11 corresponds to Figure 10, but with the door in the open position,
Figure 12 illustrates a third example of the hinging of a door,
Figure 13 corresponds to Figure 12, but with the door in the open position,
Figure 14 illustrates a modification of the example of Figures 12 and 13,
Figure 15 illustrates a fourth example of the hinging of a door,
Figure 16 corresponds to Figure 15, but with the door in a semi-open inspection position,
Figure 17 corresponds to Figure 16, but with the door about to be opened as shown in Figure 18,
Figure 18 corresponds to Figure 17, but with the door in the open position,
Figure 19 is an inclined view of the door of Figure 18,
Figure 20 illustrates a fifth examples of a door arrangement,
Figure 21 is a front view of an embodiment of a current collector module,
Figure 22 is a side view of the embodiment of Figure 21,
Figure 23 is a top view of the embodiment of Figure 21,
Figure 24 is an inclined view of a second embodiment of an outlet socket according to the invention,
Figure 25 is a front view of the embodiment of Figure 24,
Figure 26 is a side view of the embodiment of Figure 24,
Figure 27 is a top view of the embodiment of Figure 24,
Figure 28 is a front view of a second embodiment of a current collector module,
Figure 29 is a side view of the embodiment of Figure 28, and
Figure 30 is a top view of the embodiment of Figure 28.

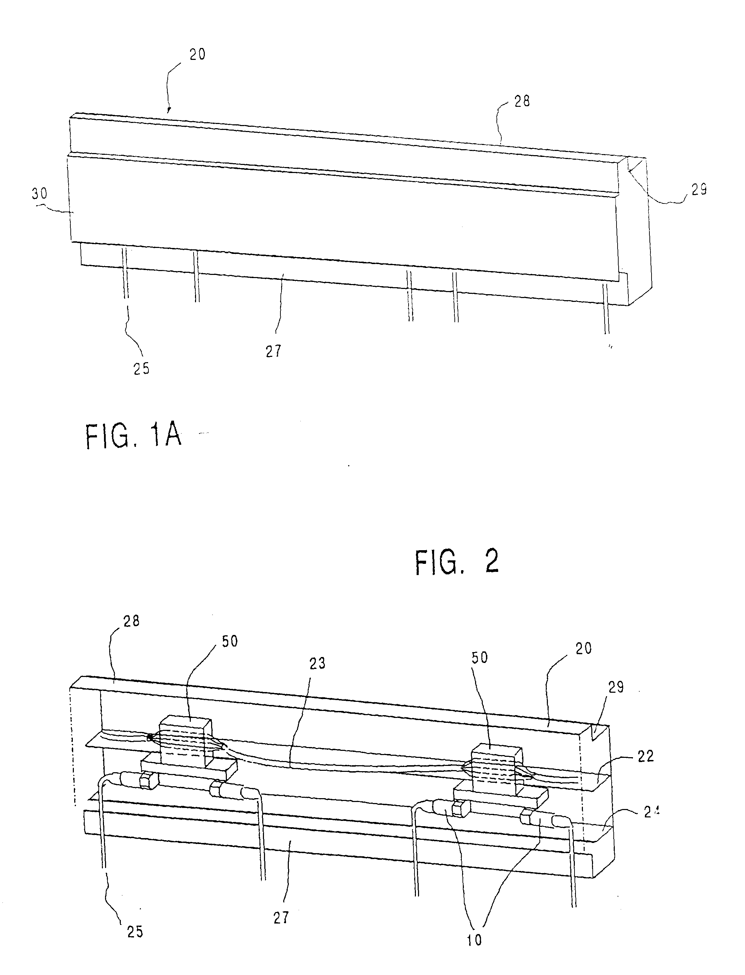

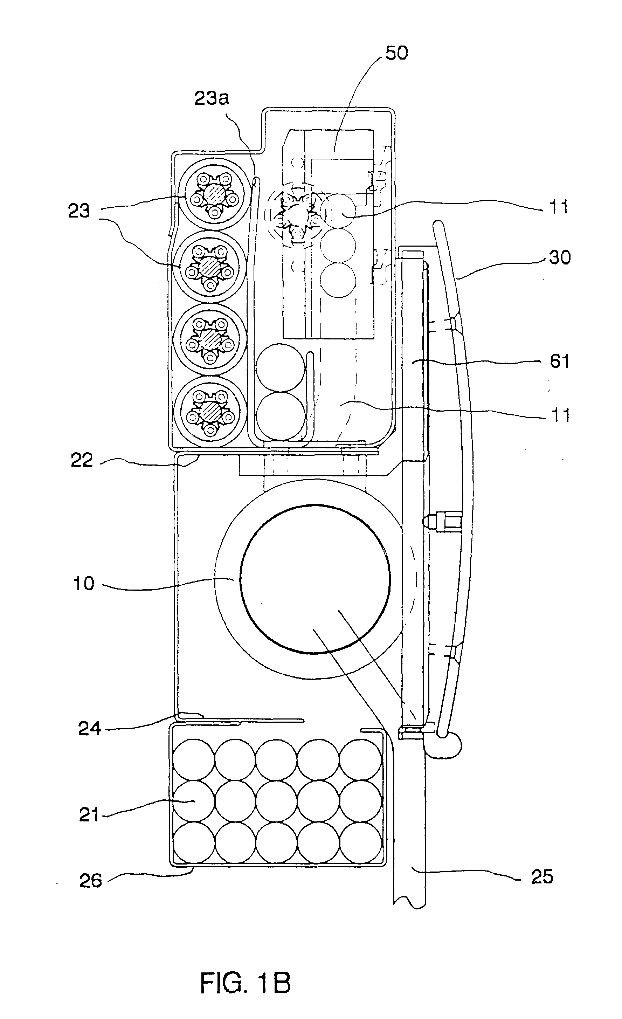

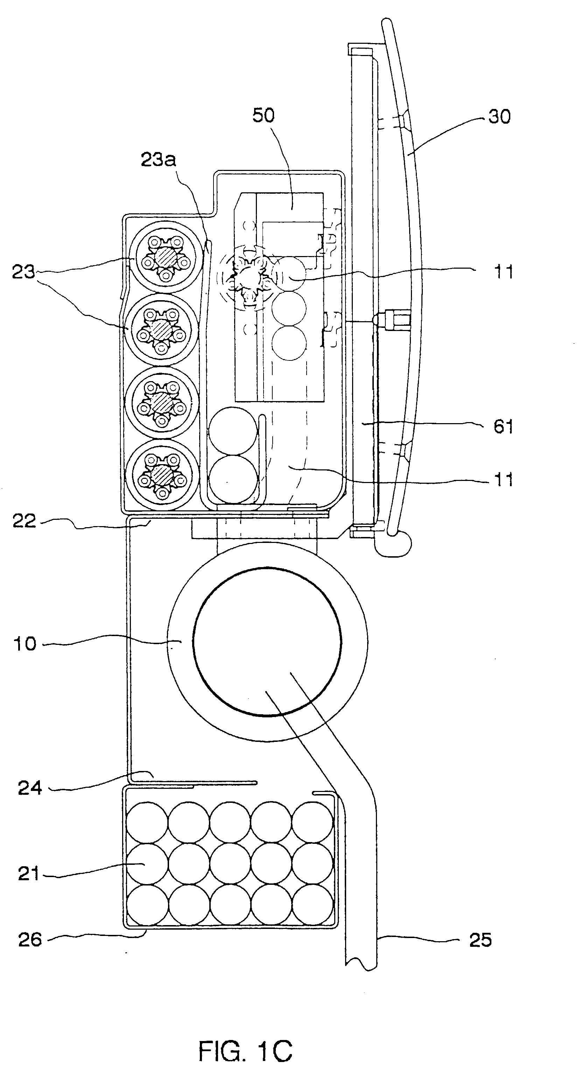

Examples of a length of a cable channel 20 according to the invention appear from Figures 1 to 3B. An opening panel 30 can be opened and thereby allow access to the interior of the channel 20. Cables 25 extend through a slot between a lower front panel 27 and the opening panel 30.

The top panel 28 of the channel is preferably shaped with a step 29, which both reinforces the top panel and makes the channel look narrow. According to an alternative embodiment not shown, the top panel 28 is flat.

In a preferred embodiment according to the invention the cable channel is provided with three shelves 22 to 26, cf. Figures 1A, 1B, 1C, 2, and 7, viz. an uppermost shelf 22 for power cables, i.e. heavy current cables 23, an intermediary shelf 24 for terminal means 10 and cables 25 for connecting apparatuses in the associated room with said terminal means 10, as well as a lowermost shelf 26 which can house data cables and telecables 49 which should be kept at a distance from the heavy current cables 23.

The heavy current cables are typically 5 times 1½ to 2½ mm² and are preferably retained by a cable hoop 23a which can retain additional extra standard cables, such as two pieces of 5 times 2½ mm². Soft cables 11 conduct the current from the current collector module 50 to the terminal means 10.

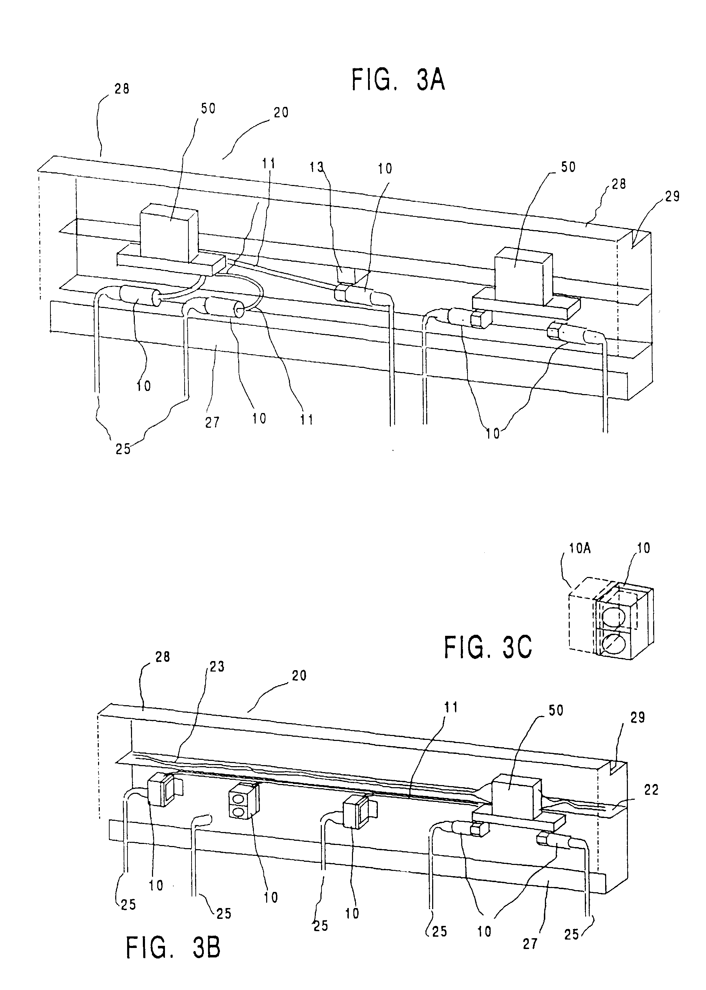

Figures 2, 3A, and 3B illustrate the channel without an opening panel in order to show terminal means 10 mounted inside the channel 20. Figure 2 illustrates an example of an arranging of a heavy current cable 23 on the uppermost cable shelf 22. The cable is laid in such a manner relative to current collector modules 50 that the preferably rolled up jacket-surrounded flat cable with five conductors can be unfolded and inserted in form of a flat cable through the current collector modules 50.

In order to make the channel as narrow as possible, said channel is not provided with conventional outlet sockets or terminal means, but with movable terminal means and preferably a plurality of particular terminal means 10 according to the invention, cf. for instance Figures 2 and 4 to 6. The terminal means are adapted to be pivotally mounted inside the channel 20, such as by way of hinging and preferably pivotally about a vertical axis, whereby each terminal means 10 can be turned forwards with the connecting of said terminal means facing the user, i.e. the room. In this manner it is easy for the user to insert a plug. When a plug has been mounted in the terminal means 10, all said parts are turned into the channel in such a manner that terminal means 10, plug, and cable are arranged substantially parallel to the channel 20. Accordingly, the channel 20 need only be of a width corresponding to the width of the terminal means 10.

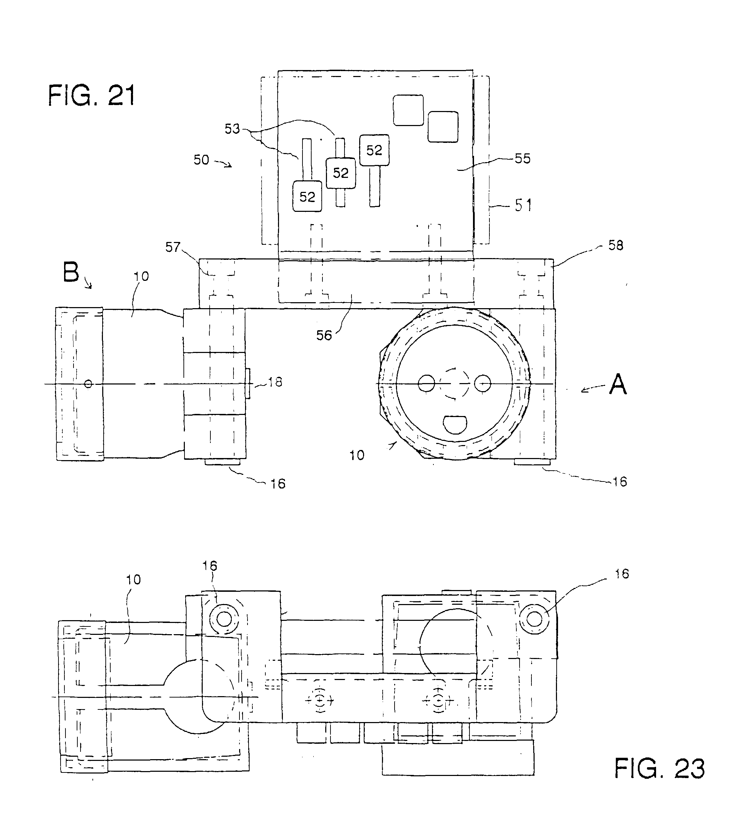

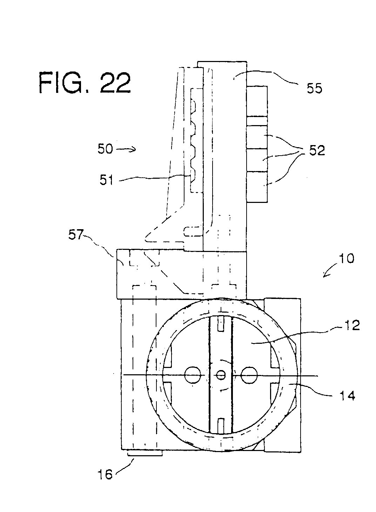

Pivotal means 10 are preferably used according to the invention, said means being mounted directly on the current collector modules 50, for instance as shown in Figures 21 to 23.

As an alternative, terminal means 10' can be mounted on one end of a length 11 of cable, where the opposite end of said cable is connected to the current collector module 50. The terminal means 10' may optionally be loosely arranged on a cable shelf 24, but it can also be pivotally secured to a pivot mounted either directly on the channel 20 or on a holder 13 secured to the channel 20 or to the cable shelf 22. As illustrated in Figures 3B and 3C, the terminal means can be double, shaped as two sockets with one atop the other. The number of sockets of a pivotal terminal means depends on the room available inside the channel, i.e. the height of the cable channel. The terminal means of Figures 3B and 3C is rectangular and hinged to the rear side of the cable channel, for instance by means of hinge fittings which can be mounted on a DIN-rail optionally incorporated in the profile of the cable channel. The position 10 of the terminal means when a plug is to be inserted has in Figure 3C been indicated by means of a solid line, whereas the usual position 10A of said means after insertion of a plug is indicated by means of a dotted line.

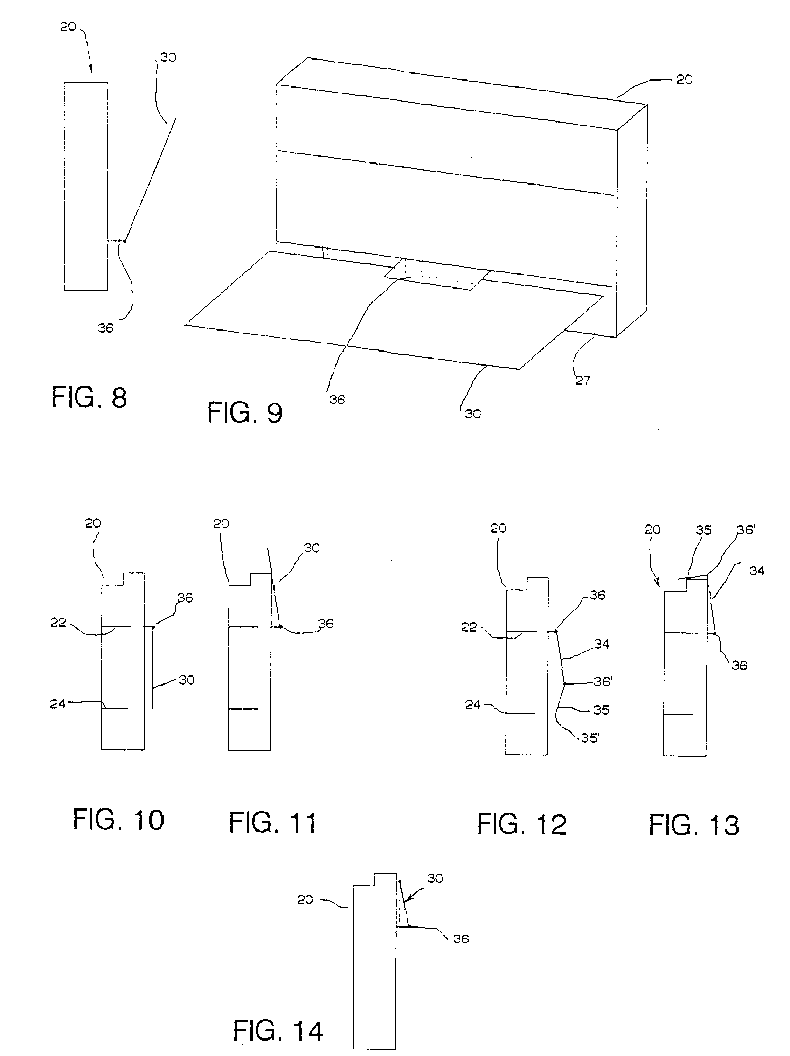

Only the intermediary shelf 24 must be accessible to the user. When the cables 25 have been connected by the user to the terminal means 10, the channel is reclosed by means of suitable opening panels 30. The opening panels can be hinged panels, tip-up panels, folding panels, panels clipped thereon and of many different shapes, such as the ones outlined in Figures 8 to 20.

The opening panels shown in Figures 1B and 1C are preferably shaped as sliding doors mounted on a plurality, usually two, vertical guiding rails. The opening panels are adapted to be lifted up, guided by the guiding rails and engage latching means in a locked upper position as shown in Figure 1C, whereby the user has access to the terminal means, but not to the shelf 22 with the heavy current cable 23 and the current collector modules 50.

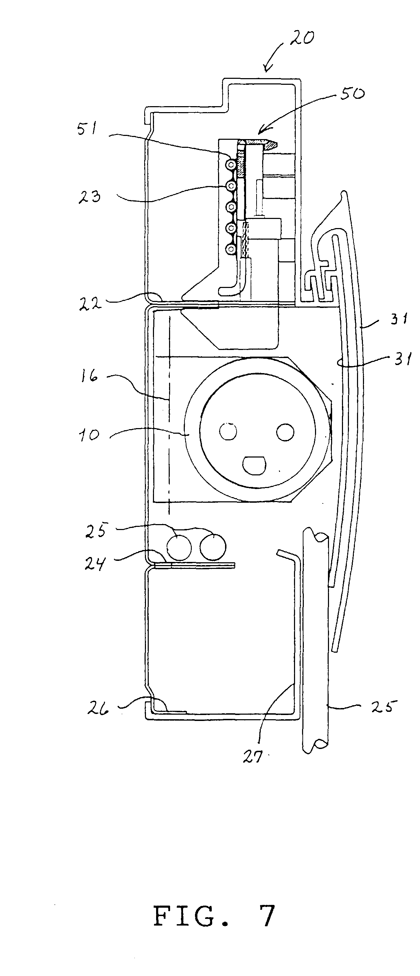

As an alternative, a sliding door 30 can be adapted to be pushed aside as shown in the embodiment of Figure 7.

The opening panels provide the cable channel with a nice appearance and at the same time they provide a protection and shielding of the terminal means and cables contained in the channel.

The cable channel with the new type of terminal means is advantageous in being narrower than previously known in connection with cable channels with inner, hidden terminal means, because it can be manufactured with a width of approximately 60 to 70 mm including the opening panels, i.e. a width of approximately 3 to 3.5 times the distance between the pins of a plug.

According to a particularly simple and sturdy embodiment shown in Figures 8 and 9, the opening panel 30 is hinged directly onto a fitting 36 secured as indicated in Figure 9 almost in the middle of the edge of the front panel 27 covering the data cable shelf. It should be observed that the opening panel 30 and the front panel 27 must be interspaced on both sides of the fitting 36 in order to make room for cables 25. The fitting is preferably only placed in a portion almost in the middle of the section of the cable channel which the associated opening panel is to cover. In this manner the cables 25 can be inserted behind the opening panel 30 from the edge of said opening panel. When the opening panel is to be opened for insertion of a plug in a terminal means 10, said opening panel is tipped down and the cable 25 inserted in the slot between the front panel 27 and said opening panel 30. Then the terminal means is turned or pulled forwards and the plug is inserted therein whereafter said terminal means is again pushed and turned into the channel. The opening panel is reclosed and retained by means of fixing means or clipping means not shown and provided for this purpose along the edges of the opening panel and the channel opening. This embodiment is, however, encumbered with the drawback that it requires approximately 20 cm of free space in front of the cable channel in order to allow an opening of the opening panel.

According to an alternative embodiment, the fitting is mounted higher up on the channel 20, preferably opposite the shelf 22. The entire structure is adapted almost as described above with a fitting 36. The opening panel 30 is mounted on the fitting 36 in such a manner that usually it is hanging downwards and covers the shelf 24. As outlined in Figures 10 and 11, the opening panel can be tipped up over the channel in such a manner that it can rest on the top portion of the channel while a plug is being inserted in one of the terminal means.

According to a further embodiment shown in Figure 12, the opening panel is again hinged at the top at 36 opposite the shelf 22. In order to minimize the requirements to space below the opening, the opening panel has been divided into an upper portion 34 and a lower portion 35 hinged to said upper portion 34 at 36'. In this manner the opening panel can be opened by a grip in the lower edge 35' of the opening panel, by a lifting up therein followed by a folding of the lower portion upwards over and behind the upper portion in such a manner that it rests on the top panel 28, cf. Figure 13, or rest slightly on a narrow supporting face' 21 provided almost in extension of the shelf 22, cf. Figure 14. By the embodiment of Figure 13, the upper portion of the opening panel is preferably so high that the fitting 36' is placed opposite the top panel 28 and in such a manner that the lower panel 35 planarly abuts the top panel 28. Magnetic locks can optionally be mounted so as to retain the opening panel in the open and the closed position, respectively.

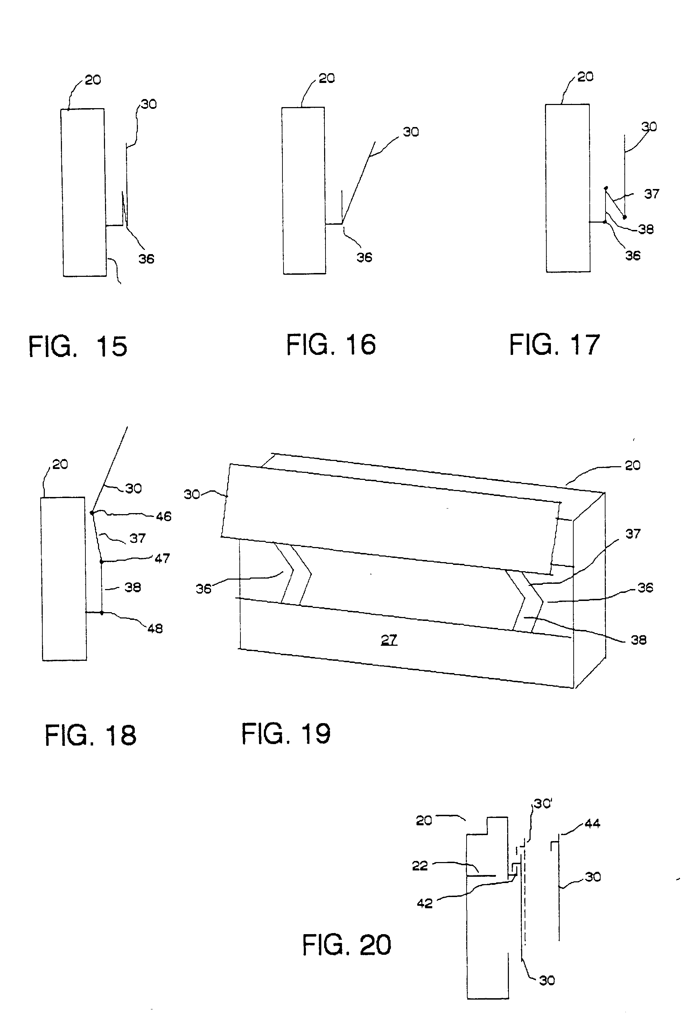

According to a second embodiment, the opening panel is placed on two fittings 36, cf. Figures 15 to 19. Each fitting 36 is a threefold hinge with three axes 46, 47, 48 of rotations, cf. Figure 18, and can be folded up as shown in Figure 15, in which the opening panel is apparently hinged directly on a fitting on the front panel 27 in the same manner as described above and as shown in Figure 8. The "arms" 37, 38 of the fitting are so long that the opening panel 30 can be pulled so far upwards that the shelf 24 and the terminal means 10 are uncovered. As shown in Figure 19, a large opening appears between the opening panel 30 and the front panel 27. This opening allows an easy insertion of plugs and cables 25. Figure 16 shows an inspection position allowing the user to inspect the channel and rendering it possible for the user to control, if desired, whether a cable is connected to a terminal means.

According to yet another alternative embodiment, the fitting is mounted higher up on the channel 20, preferably opposite the shelf 22 like in the examples shown in Figures 10 to 14. The entire structure is structured almost as described above with a fitting 38 with two "arms" 37, 38 and three axes 46, 47, 48 of rotation. The opening panel 30 is mounted on the fitting in such a manner that usually it is hanging downwards and covers the shelf 24. Almost as outlined in Figures 8 and 9 and as described in the associated text, the opening panel can be pulled upwards and tipped up over the channel in such a manner that it can rest on the top portion of the channel while a plug is being inserted in one of the terminal means.

Yet another possibility is to shape the opening panel as a roll-front which can be folded up over the top panel 28 almost as outlined in Figure 13. Magnetic locks may retain the roll-front while the cables are being connected. The opening panel can furthermore be a Venetian blind with slats that can be pulled upwards and gathered in front of the shelf 22.

According to a further embodiment, a loose opening panel 30, 30' may be used, cf. Figure 20, said panel being suspended on an upright edge 42. The panel can be lifted off and thereby removed from a section of the cable channel 20. All the opening panels 30, 30' are preferably shaped with an upright edge 44 allowing the user to temporarily place an opening panel 30' on the neighbouring opening panel 30 while a plug is being inserted in a terminal means 10.

According to a further embodiment, cf. Figure 7, the cable channel can be provided with means 42 for carrying sliding doors 31, preferably two sets of doors which can be pushed together with one on the outer side of the other. The advantage of sliding doors is found in the fact that they do not require space in the room in order to be opened.

### Description of the terminal means

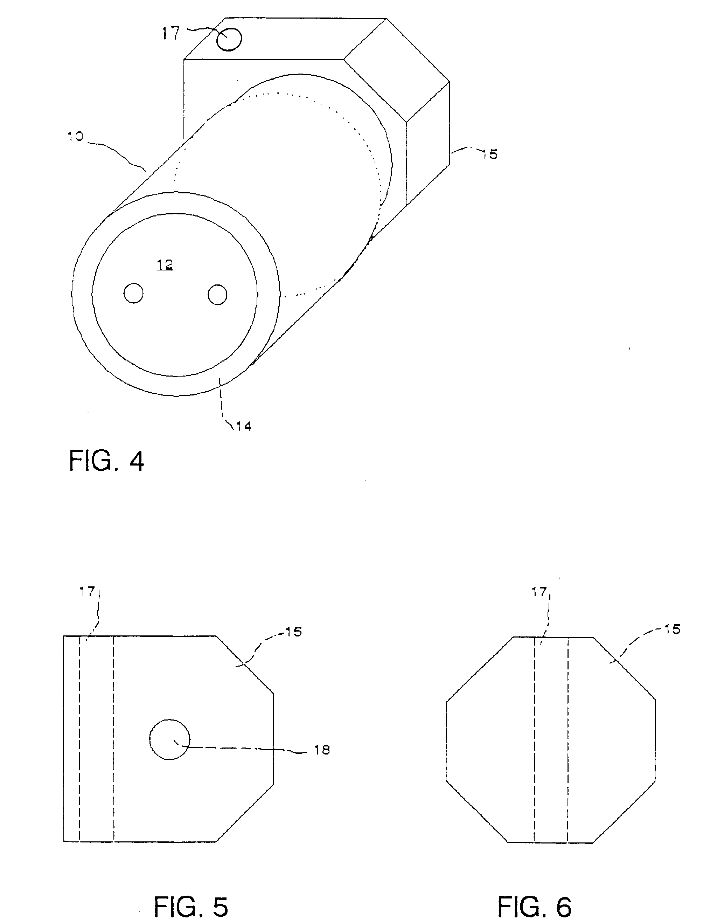

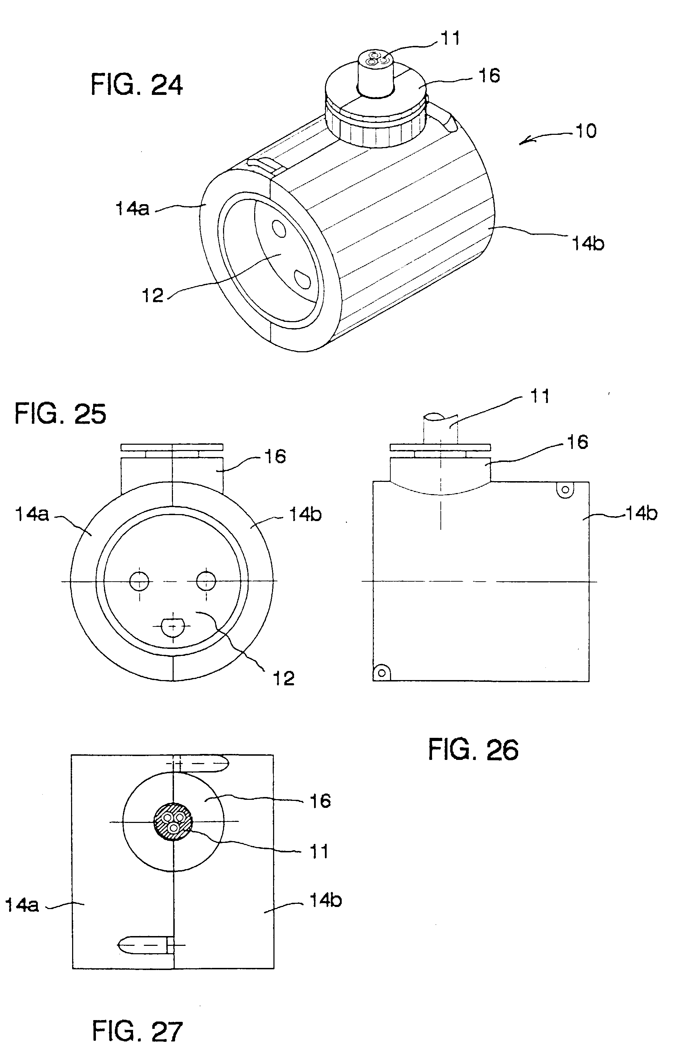

A preferred embodiment of a terminal means according to the invention is shown in Figures 4 to 6, and an alternative embodiment appears from Figures 24 to 27. The terminal means 10 is surrounded by an insulating, substantially cylindrical casing 14. In the embodiment of Figures 4 to 6, the diameter of the casing 14 is slightly smaller to the rear side where it continues into a hinged portion 15 of a polygonal cross section, cf. Figures 4 and 5. This portion houses a through channel 17 for receiving a pivot 16. The terminal means can rotate about this pivot 16 when it is mounted in the cable channel 20. The channel 17 for the pivot 16 can be placed in the side of the portion 15, cf. Figures 4 and 5, but it can also be placed in the middle as outlined in Figure 6 and Figures 24 to 27. Such an arrangement is advantageous in placing the inserting surface further forward relative to the front side of the cable channel. As a result, it is easy for the user to insert a plug in the terminal means.

The pivotal arrangement 16, 17 can be structured so as to house the soft cable 11, cf. Figures 24 to 28, said soft cable being the electrical connection to the current collector module.

The casing 14 surrounds an inner terminal means 12 housing the electrical terminal conductors which the conducting pins of the plug must come into contact with. These conductive components do not appear from the drawings because they are structured in a completely conventional manner.

The inner terminal means 12 is preferably substantially cylindrical and rotatably journalled in the casing 14 in form of two coaxial cylinders which can rotate relative to one another about a pivot 18. The casing 14 can be formed by two semi-shells 14a and 14b.

The inner terminal means 12 and the casing 14 can also be shaped as portions of concentric ball shells which can turn and/or tip relative to one another.

As a result, plugs of a varying type can be turned in such a manner that they are advantageously arranged, for instance in such a manner that they take up minimum space in the width of the cable channel. The latter is of vital importance for angularly shaped plugs. A stop is preferably provided which restricts the rotation.

The terminal means according to the invention is preferably mounted on the bottom side of a current collector module 50, but it can also be mounted on a fitting 13 with a pivot 16 to be secured in a cable channel 20, especially below a cable shelf 22, cf. Figure 3A.

According to a particularly simple embodiment, the terminal means is shaped in form of an extension means mounted on one end of a length of a wire, the opposite end of which is connected to the power supply, preferably through a current collector module 50.

Such a terminal means can be provided with a pivotal or tiltable inner terminal means 12 as described above, and it can furthermore be provided with various particular devices, such as a transformer for low voltage for the power supply of low voltage bulbs, such as halogen bulbs, a built-in fuse or clock with a timed coupling and uncoupling.

An essential feature of the present invention is that the terminal means 10 is connected to the power supply, i.e. to the current collector module 50 through a movable junction means, such as a length 11 of wire or a fitting 13, 15, 16.

### Description of current collector module

According to a preferred embodiment the cable channel is provided with a plurality of current collector modules 50 for the connection to a heavy current cable 23 placed in the uppermost cable tray or shelf 22, cf. Figures 3B and 7. The current collector module 50 is provided with a slot or notch 59 of such a width that the current collector module can be pressed inwards over the cable shelf 22.

A cable 23 in form of a rolled up flat cable with five conductors (three phases and zero and ground) is preferably used. The cable 23 is unfolded opposite each current collector module 50 and while flat it is inserted in the cable holder 51 of the current collector module, cf. Figure 7.

The module is provided with five knife contacts not shown but arranged on buttons 52 adapted to be pressed inwards in such a manner that the knife contacts can cut their way into the conductors. In Figure 21, the buttons and the knife contacts are arranged such that a knife is provided for each phase conductor as well as for the neutral wire and a ground wire.

According to a particularly flexible embodiment of the current collector module 50, the knife contacts are mounted in slots 53 in such a manner that prior to being pressed into engagement with a selected phase conductor through a guide not shown they can be displaced to an arbitrary phase conductor. In this manner the electrician is free to chose the phase he finds most suited to load with the connection of a terminal means.

The electrical connections from the heavy current cable 23 through the current collector module 50 to the terminal means 10 are of a conventional type and therefore not shown in the drawings.

The current collector module according to the invention is provided with a bottom panel or base 56 which is somewhat broader than the current collector module 55 itself, cf. Figures 21 to 23. Two wings 57, 58 or corners of this base 56 include pivots 16, and a rotatable terminal means 10 is mounted on each pivot 16. When a plug is to be inserted, the terminal means is turned forwards as shown at A in Figure 21, and when said plug has been mounted, the terminal means 10 is turned outwards again to the side as shown at B in Figure 21. The electrical connections in the current collector module are not shown, but can be provided in a manner known per se.

The pivot 16 of the embodiment shown is placed at the back of the socket. It can, however, be arranged in several ways, such as further forwards which implies that the terminal means can be turned further forwards. The arranging of the pivot 16 must, however, be chosen such that the arrangement of the other pivot 18 in the terminal means 10 is taken into account.

The current collector module 50 can be arbitrarily placed with respect to axial orientation in the cable channel 20 according to the customer's desire and in an arbitrary number in response to the estimated need of terminal means, such as shown in Figure 2. The new distribution system is thus advantageous in being very flexible.

The current collector module 50 according to the invention is furthermore advantageous in being suited for mounting in existing power systems with flat cables without necessitating an interruption of the power supply due to the shape of said current collector module. The shape of the current collector module implies that no uninsulated conductors are uncovered with the result that the interruption of the operation of the power system is minimized or can be completely avoided.

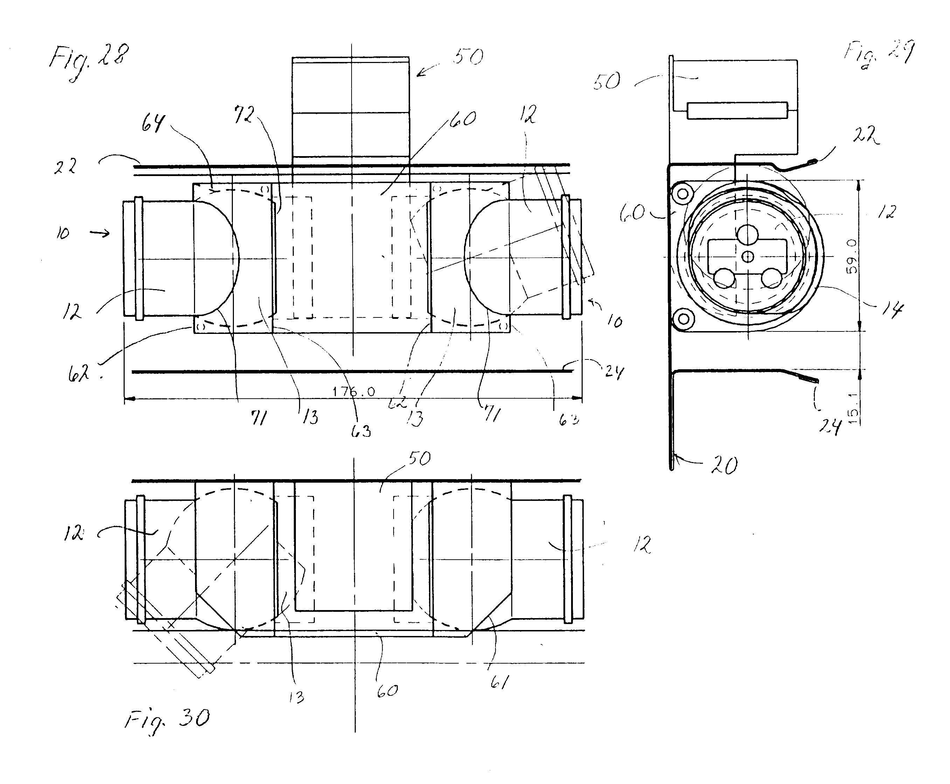

According to a particularly advantageous embodiment, the surface of the rear end 13 of the terminal means is shaped as a portion of a ball shell which can rotate in a bearing. The inner surface of the bearing is also shaped as a portion of a ball shell, especially as a broad "belt" or zone substantially circumferential in the transverse direction of the cable channel. In the direction perpendicular to the longitudinal direction of the cable channel, the "belt" or zone spans approximately 60 to 80°, especially 72° of the ball surface. In the embodiment shown in Figure 28, the "belt" or zone is restricted by the lines 62 and 63. By "belt" is meant the zone of a sphere surface remaining after cutting away two opposing spherical segments.

The outer surface of the front portion 12 of the terminal means is preferably shaped as a substantially circular cylinder 60 abutting the ball surface along the curve 71 indicated by a solid line in Figure 28.

As illustrated in Figure 30, the "belt" has been obliquely cut off along a line 61 forming an angle of approximately 45° with the axis of the cylinder 60. In this manner the terminal means resting in the bearing is provided with such a high freedom of movement that it can be turned outwards approximately 45°, which makes it easy for the user to see and hit the openings which the pins of a plug are to be inserted in.

As shown at 64 to the left of Figure 28, the belt and ball-shaped bearing can furthermore be shaped such that the supporting bearing is upwardly restricted at 64 because here the surface curves outwards and away from the ball surface. In this manner the terminal means can be tipped up approximately 25°, which is particularly advantageous when angular plugs are inserted in the terminal means. This arrangement allows more space for the exit conductor of the angular plug.

The partially ball-shaped rear end of the terminal means has preferably been cut off along the line 72 of Figure 28 in such a manner that an opening appears for the insertion of electrical conductors not shown.

A partially ball and belt-shaped bearing can be provided in each end of a substantially cylindrical jacket 60 thus housing two pivotal terminal means, viz. one at each end as shown in Figures 28 to 30.

The jacket 60 can be connected to a scanning module 50, cf. Figures 28 to 30, which is adapted to surround and fix a flat cable not shown and furthermore to establish a connection to selected conductors inside the cable. Such connections can be provided for instance as shown and described in connection with Figures 21 to 23, and are therefore not described further.

Instead of the rigid cylindrical jacket or sleeve 60 shown in Figures 28 to 30, the terminal means can be mounted in a sleeve being completely or partially formed by a resilient pipe, preferably a bellow with a corrugated "wavy" wall. The natural resilience of the "wavy" wall renders it possible to tip or turn the terminal means mounted at both ends into desired directions substantially as described above.

## Claims

1. A distribution duct for distribution of insulated electrical cables and having at least one shelf for cables and a plurality of internally mounted terminal means (10) as well as a front panel hiding both cables and terminal means, with plugs mounted therein, said terminal means (10) being connected to power supply means (50), characterised by a turnable junction (11, 13, 15) connecting the terminal means (10) to the power supply means (50), said turnable junction means being pivotally arranged about a first axis (16) of rotation and pivotally arranged about a second axis (18) of rotation substantially perpendicular to said first axis (16) of rotation.

2. A distribution duct as claimed in claim 1, characterised in that it comprises at least one cable shelf (22) for distributing insulated heavy current conductors or power cables (23), at least one cable shelf (24) for apparatus cables (25) from the terminal means (10), and at least one cable shelf or bottom for distributing data cables and/or telecables, and that the turnable terminal means (10) mounted on the turnable junction means (11, 13, 15) are arranged in connection with a cable shelf (24) for the apparatus cables (25), and that this shelf (24) is provided with opening panels (30) which can be opened in order to allow the user access to the terminal means (10) at this shelf.

3. A distribution duct as claimed in claim 2, characterised in that the opening panels (30) are shaped as sliding doors slidable to the side or up and down.

4. A distribution duct as claimed in claim 2, characterised in that the opening panels are shaped as hinged panels.

5. A distribution duct as claimed in claim 4, characterised in that the opening panels are shaped as tip-up panels.

6. A distribution duct as claimed in one or more of the preceding claims 1 to 5, characterised by an electrical terminal means comprising pivotal means, such as a hinge device, or being adapted to be mounted on a hinge or the like pivoting means inside the distribution duct (20).

7. A distribution duct as claimed in claim 6, characterised in that the electrical terminal means is mounted on a vertical pivot (16) inside the distribution duct (20).

8. A distribution duct as claimed in claim 6 or 7, characterised in that the electrical terminal means comprises an inner terminal means (12) with means for receiving a plug rotatably mounted in a casing (14).

9. A distribution duct as claimed in claim 8, characterised in that the casing (14) is turnably mounted in the distribution duct (20).

10. A distribution duct as claimed in claim 8, characterised in that the terminal means is pivotally arranged about a first axis (16) of rotation, whereas the inner terminal means (12) is rotatable about a second axis (18) of rotation substantially perpendicular to said first axis (16) of rotation.

11. A distribution duct as claimed in claim 8, characterised in that the inner terminal means (12) is a preferably substantially cylindrical, rotating body and is arranged in a jacket (15) having a correspondingly shaped inner surface.

12. A distribution duct as claimed in claim 8, characterised in that the inner terminal means (12) is shaped substantially as a portion of a ball shell and is arranged in a partially ball-shaped jacket (15).

13. A distribution duct as claimed in one or more of the preceding claims 1 to 12, characterised in that it comprises a cable current collector module comprising at least one terminal means (10).

14. A distribution duct as claimed in claim 13, characterised in that a current collector section (55) of the current collector module has been extended downwardly with a base member (56), one or two terminal means (10) being pivotally secured to said socket member.

15. A distribution duct as claimed in claim 14, characterised in that the base member (56) comprises two wings (57) arranged on their respective side of said current collector section (55), and that each wing (57) forms at least one bearing or hinge carrying a substantially vertical pivot (16), the terminal means (10) being able to rotate about said pivot.

16. A distribution duct as claimed in claim 13, 14 or 15, characterised in that the current collector section (55) of the current collector module is provided with three vertically extending slots (53), in which current collector knobs (52) with associated contact knives are slidable to selectable phase conductors.

## Patentansprüche

1. Verteilungskanal zur Verteilung von isolierten elektrischen Kabeln und mit mindestens einem Halter für Kabel und mehreren innen angeordneten Anschlußeinrichtungen (10) sowie einer Frontplatte, die sowohl Kabel als auch Anschlußeinrichtungen verbirgt, mit darin angeordneten Steckern, wobei die Anschlußeinrichtungen mit einer Stromversorgungseinrichtung (50) verbunden sind, gekennzeichnet durch eine drehbare Verbindung (11, 13, 15), die die Anschlußeinrichtungen (10) mit der Stromversorgungseinrichtung (50) verbindet, wobei die drehbare Verbindungseinrichtung um eine erste Drehachse (16) drehbar angeordnet ist und um eine zweite Drehchse (18) drehbar angeordnet ist, die im wesentlichen senkrecht zu der ersten Drehachse (16) ist.

2. Verteilungskanal nach Anspruch 1, dadurch gekennzeichnet, daß dieser mindestens einen Kabelhalter (22) zur Verteilung von isolierten Starkstromleitern oder Starkstromkabeln (23), mindestens einen Kabelhalter (24) für Gerätekabel (25) von den Anschlußeinrichtungen und mindestens einen Kabelhalter oder -boden zur Verteilung von Datenkabeln und/oder Telekabeln aufweist und daß die drehbaren Anschlußeinrichtungen (10), die an den drehbaren Verbindungseinrichtungen (11, 13, 15) angeordnet sind, in Verbindung mit einem Kabelhalter (24) für die Gerätekabel (25) angeordnet sind und daß dieser Halter (24) mit Öffnungsplatten bzw. -verschalungen (30) versehen ist, die geöffnet werden können, um dem Anwender Zugang zu den Anschußeinrichtungen (10) an diesem Halter zu ermöglichen.

3. Verteilungskanal nach Anspruch 2, dadurch gekennzeichnet, daß die Öffnungsplatten (30) als Schiebeturen geformt sind, die zur Seite oder nach oben und unten gleitfähig sind.

4. Verteilungskanal nach Anspruch 2, dadurch gekennzeichnet, daß die Öffnungsplatten als Schwenkplatten geformt sind.

5. Verteilungskanal nach Anspruch 4, dadurch gekennzeichnet, daß die Öffnungsplatten als Klappplatten geformt sind.

6. Verteilungskanal nach einem oder mehreren der vorherigen Ansprüche 1 bis 5, dadurch gekennzeichnet, daß eine elektrische Anschlußeinrichtung eine Gelenkeinrichtung, z. B. eine Gelenkvorrichtung, aufweist oder geeignet ist, an einem Gelenk oder der gleichen Gelenkeinrichtung im Verteilungskanal (20) angeordnet zu werden.

7. Verteilungskanal nach Anspruch 6, dadurch gekennzeichnet, daß die elektrischen Anschlußeinrichtungen an einem vertikalen Zapfen (16) im Verteilungskanal (20) angeordnet sind.

8. Verteilungskanal nach Anspruch 6 oder 7, dadurch gekennzeichnet, daß die elektrische Anschlußeinrichtung eine innere Anschlußeinrichtung (12) mit einer Einrichtung zum Aufnehmen eines Steckers aufweist, die drehbar in einem Gehäuse (14) angeordnet ist.

9. Verteilungskanal nach Anspruch 8, dadurch gekennzeichnet, daß das Gehäuse (14) drehbar im Verteilungskanal (20) angeordnet ist.

10. Verteilungskanal nach Anspruch 6, dadurch gekennzeichnet, daß die Anschlußeinrichtung drehbar um eine erste Drehachse (16) angeordnet ist, während die innere Anschlußeinrichtung (12) um eine zweite Drehachse (13) drehbar ist, die im wesentlichen senkrecht zu der ersten Drehachse (16) ist.

11. Verteilungskanal nach Anspruch 8, dadurch gekennzeichnet, daß die innere Anschlußeinrichtung (12) ein vorzugsweise im wesentlichen zylindrischer Drehkörper ist und in einer Hülle (15) mit einer entsprechend geformten Innenfläche angeordnet ist.

12. Verteilungskanal nach Anspruch 8, dadurch gekennzeichnet, daß die innere Anschlußeinrichtung (12) im wesentlichen als ein Abschnitt einer Kugelschale geformt ist und in einer im wesentlichen kugelförmigen Hülle (15) angeordnet ist.

13. Verteilungskanal nach einem oder mehreren der vorhergehenden Ansprüche 1 bis 12, dadurch gekennzeichnet, daß dieser ein Kabelstromabnehmermodul mit mindestens einer Anschlußeinrichtung (10) aufweist.

14. Verteilungskanal nach Anspruch 13, dadurch gekennzeichnet, daß ein Stromabnehmerteil (55) des Stromabnehmermoduls nach unten mit einem Basisteil (56) erweitert worden ist, wobei ein oder zwei Anschlußeinrichtungen (10) drehbar an dem Fassungsteil befestigt sind.

15. Verteilungskanal nach Anspruch 14, dadurch gekennzeichnet, daß das Basisteil (56) zwei Flügel (57) aufweist, die an ihrer jeweiligen Seiten des Stromabnehmerteils (55) angeordnet sind, und daß jeder Flügel (57) mindestens ein Lager oder Gelenk bildet, das eine im wesentlichen senkrechten Zapfen (16) trägt, wobei die Anschlußeinrichtung (10) um den Zapfen gedreht werden kann.

16. Verteilungskanal nach Anspruch 13, 14 oder 15, dadurch gekennzeichnet, daß der Stromabnehmerteil (55) des Stromabnehmermoduls mit drei sich vertikal erstreckenden Schlitzen (53) versehen ist, in denen Stromabnehmerknöpfe (52) mit zugehörigen Kontaktmessern in wählbare Phasenleiter gleitfähig sind.

## Revendications

1. Gaine de distribution pour la distribution de câbles électriques isolés et comportant au moins une étagère pour les câbles et une pluralité d'éléments terminaux (10) montés à l'intérieur, ainsi qu'un panneau frontal qui cache à la fois les câbles et les éléments terminaux, comprenant des plots montés à l'intérieur, lesdits éléments terminaux (10) étant connectés à des moyens de fourniture de puissance (50), caractérisée par une jonction capable de tourner (11, 13, 15) qui connecte les éléments terminaux (10) aux moyens de fourniture de puissance (50), ladite jonction capable de tourner étant agencée en pivotement autour d'un premier axe (16) de rotation et agencée en pivotement autour d'un deuxième axe (18) de rotation sensiblement perpendiculaire audit premier axe (16) de rotation.

2. Gaine de distribution selon la revendication 1, caractérisée en ce qu'elle comprend au moins une étagère à câble (22) pour distribuer des conducteurs de courant lourds isolés ou des câbles de puissance (23), au moins une étagère à câble (24) pour des câbles d'appareillage (25) provenant des éléments terminaux (10), et au moins une étagère à câble, ou un fond, pour distribuer des câbles de données et/ou des câbles de télécommunication, et en ce que les éléments terminaux (10) capables de tourner et montés sur la jonction capable de tourner (11, 13, 15) sont agencés en relation avec une étagère à câble (24) pour les câbles d'appareillage (25), et en ce que cette étagère (24) est pourvue de panneaux ouvrants (30) que l'on peut ouvrir afin de permettre à l'utilisateur un accès vers les éléments terminaux (10) au niveau de cette étagère.

3. Gaine de distribution selon la revendication 2, caractérisée en ce que les panneaux ouvrants (30) sont conformés à la manière de portes coulissantes capables de coulisser vers le côté, ou bien dans la direction haut/bas.

4. Gaine de distribution selon la revendication 2, caractérisée en ce que les panneaux ouvrants sont conformés à la manière de panneaux articulés.

5. Gaine de distribution selon la revendication 4, caractérisée en ce que les panneaux ouvrants sont conformés à la manière de panneaux basculants.

6. Gaine de distribution selon l'une ou plusieurs des revendications précédentes 1 à 5, caractérisée par un élément terminal électrique comprenant des moyens pivotants, comme un dispositif à charnière, ou bien étant adapté à être monté sur une charnière ou sur des moyens de pivotement similaires à l'intérieur de la gaine de distribution (20).

7. Gaine de distribution selon la revendication 6, caractérisée en ce que l'élément terminal électrique est monté sur un pivot vertical (16) à l'intérieur de la gaine de distribution (20).

8. Gaine de distribution selon l'une ou l'autre des revendications 6 et 7, caractérisée en ce que l'élément terminal électrique comprend une pièce terminale intérieure (12) avec des moyens pour recevoir un plot monté en rotation dans un boîtier (14).

9. Gaine de distribution selon la revendication 8, caractérisé en ce que le boîtier (14) est monté avec faculté de tourner dans la gaine de distribution (20).

10. Gaine de distribution selon la revendication 8, caractérisé en ce que l'élément terminal est agencé en pivotement autour d'un premier axe de rotation (16), tandis que la pièce terminale intérieure (12) est capable de tourner autour d'un deuxième axe (18) de rotation sensiblement perpendiculaire audit premier axe (16) de rotation.

11. Gaine de distribution selon la revendication 8, caractérisée en ce que la pièce terminale intérieure (12) est un corps rotatif, de préférence sensiblement cylindrique, et en ce qu'elle est agencée dans une chemise (15) ayant une surface intérieure de forme de correspondante.

12. Gaine de distribution selon la revendication 8, caractérisée en ce que la pièce terminale intérieure (12) est conformée sensiblement à la manière d'une partie de coquille sphérique, et en ce qu'elle est agencée dans une chemise (15) partiellement en forme de coquille sphérique.

13. Gaine de distribution selon l'une ou plusieurs des revendications 1 à 12, caractérisée en ce qu'elle comprend un module collecteur de courant à câble qui comprend au moins un élément terminal (10).

14. Gaine de distribution selon la revendication 13, caractérisée en ce qu'une section de collecte de courant (55) du module collecteur de courant est prolongée vers le bas avec un élément de base (56), un ou deux éléments terminaux (10) étant fixés en pivotement sur ledit élément de socle.

15. Gaine de distribution selon la revendication 14, caractérisée en ce que l'élément de base (56) comprend deux ailes (57) agencées sur leur côté respectif de ladite section de collecte de courant (55), et en ce que chaque aile (57) forme au moins un palier ou charnière portant un pivot sensiblement vertical (16), les éléments terminaux (10) étant capables de tourner autour dudit pivot.

16. Gaine de distribution selon l'une des revendications 13, 14 et 15, caractérisée en ce que la section de collecte de courant (55) du module collecteur de courant est pourvue de trois fentes verticales (53) dans lesquelles des boutons collecteurs de courant (52) avec leurs couteaux de contacts associés sont capables de coulisser vers des conducteurs de phase choisis.
